# FASCICULE DE BREVET EUROPEEN

(11) **EP 0 687 085 B1**
(45) Date de publication et mention de la délivrance du brevet: **01.10.2003**
(21) Numéro de dépôt: 95401277.9
(22) Date de dépôt: 01.06.1995
(51) Int. Cl.: H04J 14/02, H04Q 11/00

(54) **Multiplexeur spectral optique à insertion-extraction**
Optischer Multiplexer mit Einfügen und Ausblenden von Kanälen
Optical drop/insert multiplexer

(30) Priorité: 07.06.1994 FR 9406984
(43) Date de publication de la demande: 13.12.1995
(73) Titulaire: ALCATEL, 75008 Paris (FR)
(72) Inventeur: Fevrier, Hervé, F-91370 Verrières le Buisson (FR); Perrier, Philippe, F-78140 Velizy-Villacoublay (FR); Berthelon, Luc, F-91120 Palaiseau (FR)
(74) Mandataire: Sciaux, Edmond

(56) Documents cités:
- EP-A- 0 488 241
- PROCEEDINGS IEEE CONFERENCE ON COMPUTER COMMUNICATIONS INFOCOMM '93., vol. 1, 28 Mars 1993 SAN FRANCISCO (US), pages 578-585, KUON-CHUN LEE ET AL. 'Routing and switching in a wavelength convertible optical network.'
- TRANSACTIONS OF THE INSTITUTE OF ELECTRONICS AND COMMUNICATION ENGINEERS OF JAPAN, SECTION E, vol. e74, no. 1, 1 Janvier 1991 TOKYO JP, pages 84-91, MINORU AKIYAMA ET AL. 'Photonic switching system'
- JOURNAL OF LIGHTWAVE TECHNOLOGY, vol. 11, no. 5/6, Mai 1993 NEW YORK US, pages 714-732, STEPHEN B. ALEXANDER ET AL. 'A precompetitive consortium on wide-band all-optical networks'

## Description

L'invention concerne un multiplexeur spectral à insertion-extraction, pour extraire un multiplex dit extrait et pour insérer un multiplex dit à insérer sur un multiplex optique comportant une pluralité de porteuses optiques multiplexées spectralement. Chaque porteuse optique est modulée par un signal modulant qui peut résulter d'un multiplexage temporel d'une pluralité de canaux. Un tel multiplexeur est utilisable notamment dans les réseaux de transmission optique selon la hiérarchie numérique synchrone.

L'article : "Arrayed-waveguide grating add-drop multiplexer with loop back optical path" Electronic Letters 25 november 1993 vol 29 n°24 p 2133 décrit un multiplexeur spectral à insertion-extraction comportant un composant appelé réseau de guides d'ondes (arrayed-waveguide grating) qui est fonctionnellement équivalent à un démultiplexeur spectral comportant une entrée et N sorties, pour séparer N porteuses optiques ayant respectivement N longueurs d'onde distinctes; et à un multiplexeur spectral à N entrées et une sortie, pour multiplexer spectralement N porteuses optiques ayant N longueurs d'onde distinctes, respectivement égales aux précédentes.

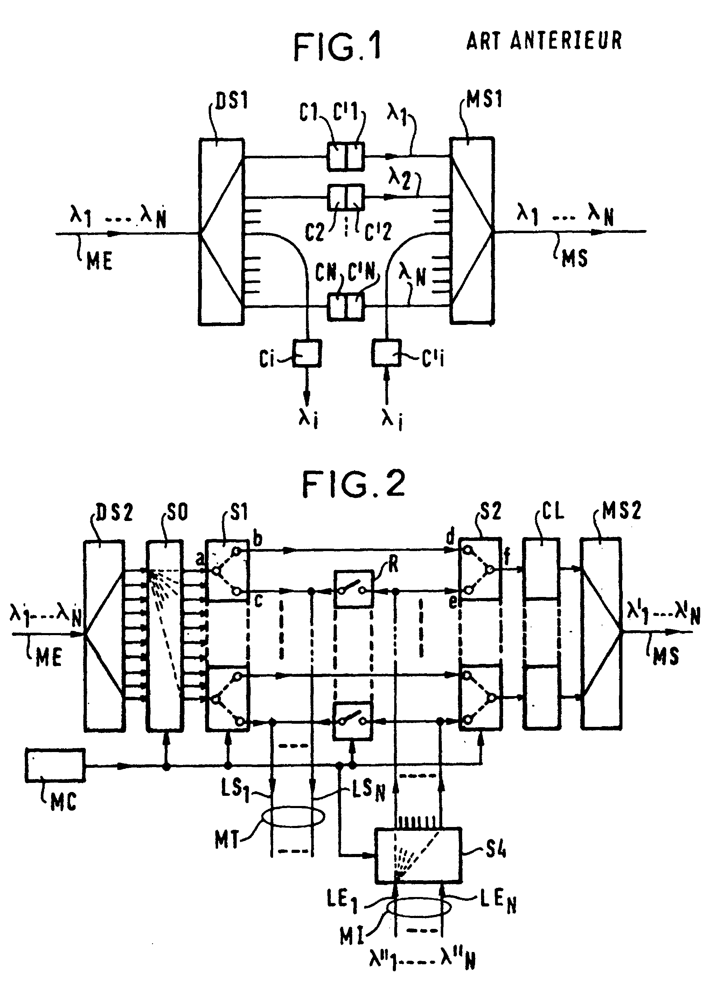

La figure 1 représente le schéma synoptique du multiplexeur spectral à insertion-extraction réalisé au moyen de ce composant. Un multiplex entrant ME est appliqué à l'entrée d'un démultiplexeur DS1. Un multiplex sortant MS est fourni par la sortie d'un multiplexeur MS1. Les N sorties du démultiplexeur DS1 sont reliées à N segments de fibre optique, l'extrémité de chacun étant munie d'un connecteur, respectivement C1, ..., CN. Les N entrées du multiplexeur MS1 sont reliées respectivement à N segments de fibre optique, l'extrémité de chacun étant munie d'un connecteur, respectivement C'1, ..., C'N.

Ces connecteurs constituent un moyen pour sélectionner manuellement parmi les N sorties du démultiplexeur DS1, S sorties; et pour fournir au multiplexeur MS1 P porteuses optiques à insérer dans le multiplex sortant MS. Les porteuses à insérer ont respectivement P longueurs d'onde distinctes, choisies parmi les S longueurs d'onde correspondant aux S sorties sélectionnées, le nombre P des porteuses à insérer étant au plus égal au nombre S. Par exemple, en débranchant manuellement les connecteurs Ci et C'i, il est possible d'extraire une porteuse de longueur d'onde λi, celle-ci étant fournie par le connecteur Ci, et d'insérer une autre porteuse de longueur d'onde λi, modulée par d'autres données, en l'appliquant au connecteur C'i.

Pour transmettre les porteuses qui ne sont pas extraites, il suffit de laisser branchés ensemble les connecteurs correspondants. Par exemple, si la porteuse de longueur d'onde λ1 n'a pas à être extraite, il suffit de laisser branchés ensemble les connecteurs correspondants C1 et C'1.

Ce dispositif connu présente l'avantage d'être très simple, mais il a un sérieux inconvénient : les longueurs d'onde du multiplex sortant MS, les longueurs d'onde correspondant aux S sorties sélectionnées, les longueurs d'onde des porteuses à insérer, et les longueurs d'onde du multiplex entrant ME, ne sont pas indépendantes. En effet :
- Les porteuses non extraites conservent chacune leurs longueurs d'onde respectives.
- Les porteuses insérées ont obligatoirement des longueurs d'onde respectivement identiques à celles correspondant aux S sorties sélectionnées, parce que le principe de fonctionnement d'un réseau de guides d'onde impose d'utiliser une longueur d'onde prédéterminée pour chacune des entrées de ce réseau.

Cet inconvénient est particulièrement gênant dans le cas de la réalisation d'un réseau de télécommunication à haut débit constitué de tronçons de fibre optique entre lesquels sont insérés des multiplexeurs à insertion-extraction. La protection d'un tel réseau contre les défaillances de ligne ou de multiplexeur, et l'adaptation du réseau aux variations du trafic, nécessitent de pouvoir reconfigurer rapidement ce réseau. Les possibilités de reconfiguration sont très limitées lorsqu'il n'est pas possible de redistribuer les longueurs d'onde aux signaux modulants pour modifier le routage de ces signaux, le routage étant fonction de la longueur d'onde portant chaque signal.

D'autre part, ce multiplexeur connu ne permet pas de diffuser des mêmes données vers plusieurs destinataires dans un réseau, car il ne permet pas de faire simultanément la transmission d'une porteuse vers le multiplex sortant et vers le multiplex extrait. Enfin, il ne permet pas de faire un rebouclage du multiplex à insérer vers le multiplex extrait, pour une ou plusieurs porteuses du multiplex à insérer.

Le document PROCEEDINGS IEEEE CONFERENCE ON COMPUTER COMMUNICATION INFOCOMM'93., vol.1, 28 March 1993, SAN FRANCISCO (US), pages 578-585, KUON-CHUN LEE ET AL. « Routing and switching in a wavelength convertible optical network » décrit un multiplexeur spectral optique à insertion-extraction, permettant d'extraire un signal d'un multiplex entrant, et d'insérer un signal dans un multiplex sortant, comportant :
- un étage démultiplexeur pour démultiplexer spectralement N porteuses dans le multiplex entrant,
- un étage de N convertisseurs de longueur d'onde et un combineur optique pour multiplexer spectralement N porteuses et constituer ainsi un multiplex sortant,
- et une matrice de commutation (N+1)x(N+1) non bloquante, N entrées étant reliées respectivement aux N sorties de l'étage démultiplexeur et une (N+1)ième entrée recevant le signal à insérer ; N sorties étant reliées respectivement aux N convertisseurs de longueur d'onde, et un (N+1)ième sortie fournissant le signal extrait.

Le démultiplexeur est un démultiplexeur classique, c'est à dire dans lequel chaque sortie correspond une longueur d'onde fixée définitivement. Par conséquent, les longueurs d'onde des porteuses du multiplex entrant déterminent respectivement quelles entrées de la matrice reçoivent ces porteuses. Pour pouvoir changer librement la longueur d'onde d'une porteuse arrivant dans le multiplex d'entrée ou par l'entrée de signal à insérer, il faut que cette porteuse puisse être transmise à n'importe lequel des N convertisseurs de longueur d'onde. Il faut donc que la matrice permette d'accéder à l'un quelconque des N convertisseurs de longueur d'onde. C'est pourquoi le dispositif comporte une matrice de commutation (N+1)x(N+1) non bloquante, permettant de relier une quelconque de ses entrées à une quelconque de ses sorties.

Le document ne considère qu'une seule porteuse à insérer. Si on veut pouvoir insérer jusqu'à N porteuses et extraire jusqu'à N porteuses, il faut une matrice de commutation optique 2Nx2N.

Le document TRANSACTION OF THE INSTITUTE OF ELECTRONICS AND COMMUNICATION ENGINEERS OF JAPAN, SECTION E, vol. e74, n°1, 1 janvier 1991 Tokyo JP, pages 84-91, MINORU ARYIAMA ET AL. « Photonic Switching System » décrit une matrice de commutation optique relativement simple à réaliser. Pour N entrées et N sorties, elle comporte : un étage de N convertisseurs de longueur d'onde, un coupleur passif ayant N entrées reliées aux convertisseurs de longueur d'onde, et un étage de N filtres accordables reliés respectivement à N sorties du coupleur. Les N convertisseurs utilisent N longueurs d'onde distinctes. On souhaite généralement pouvoir utiliser le même jeu de longueurs d'onde dans le multiplex entrant et dans le multiplex sortant. Ceci n'est pas possible avec la matrice décrite dans le second document car on ne peut pas injecter dans le coupleur passif 2N porteuses si on ne veut avoir en sortie qu'un jeu de N longueurs d'onde identiques à celles utilisées dans le multiplex entrant. II faut nécessairement utiliser 2N longueurs d'onde distinctes, c'est à dire un nouveau jeu de longueurs d'onde pour les N porteuses à insérer.

Le but de l'invention est de proposer un multiplexeur à insertion-extraction qui soit simple à réaliser.

L'objet de l'invention est un multiplexeur spectral optique à insertion-extraction, pour extraire un multiplex extrait, d'un multiplex entrant, et pour insérer un multiplex à insérer dans un multiplex sortant, comportant :
- des premiers moyens pour démultiplexer spectralement, susceptibles de séparer N porteuses dans le multiplex entrant, ce multiplex entrant comportant au plus N porteuses;
- des seconds moyens pour démultiplexer spectralement, susceptibles de séparer N porteuses dans le multiplex à insérer, ce multiplex à insérer comportant au plus N porteuses;
- des moyens pour multiplexer spectralement, susceptibles de multiplexer N porteuses et constituer ainsi un multiplex sortant, comportant :
   -- N convertisseurs de longueur d'onde ;
   -- un combineur optique à N entrées reliées respectivement aux sorties de N convertisseurs de longueur d'onde ;
- des moyens de couplage pour coupler les moyens pour démultiplexer aux moyens pour multiplexer; comportant des moyens pour sélectionner et fournir aux moyens pour multiplexer : T porteuses sélectionnées parmi les porteuses démultiplexées par les premiers moyens pour démultiplexer, le nombre T étant variable et au plus égal à N ; et I porteuses sélectionnées parmi les porteuses démultiplexées par les seconds moyens pour démultiplexer, le nombre I étant variable et au plus égal à N ;
**caractérisé en ce que les premiers et seconds moyens pour démultiplexer, et les moyens de couplage comportent:**
-- un diffuseur optique recevant le multiplex entrant et le restituant sur au moins N sorties ;
-- un premier ensemble de N filtres accordables couplés respectivement à N sorties du diffuseur pour sélectionner dans le multiplex entrant les T porteuses transmises, le nombre T étant variable et au plus égal à N ;
-- un second ensemble de N filtres accordables pour sélectionner, parmi des porteuses constituant le multiplex à insérer, les I porteuses à insérer ;
-- N dispositifs élémentaires de couplage, chaque dispositif comportant :
   --- ou moins une première sortie, reliée à une entrée d'un convertisseur de longueur d'onde,
   --- une première entrée reliée à une sortie du premier ensemble de N filtres accordables,
   --- une seconde entrée reliée à une sortie du second ensemble de N filtres accordables ;
et en ce que chaque dispositif élémentaire de couplage ou le filtre auquel il est relié, peut être commandé pour interdire la transmission de deux porteuses simultanément vers un même convertisseur de longueur d'onde.

Selon un mode de réalisation particulier, chacun des N dispositifs élémentaires de couplage comporte un commutateur optique à deux entrées et deux sorties, une première sortie étant reliée à une entrée des moyens de conversion, et une seconde sortie étant reliée à un multiplex extrait ;
et en ce que ce commutateur optique peut être commandé pour relier chacune de ses deux entrées alternativement à la première et à la seconde sortie.

Selon un autre mode de réalisation particulier, chacun des N dispositifs élémentaires de couplage comporte un coupleur passif ayant deux entrées couplées à une sortie, cette sortie étant reliée à une entrée des moyens de conversion.

L'invention sera mieux comprise et d'autres caractéristiques apparaîtront à l'aide de la description ci-dessous et des figures l'accompagnant :
- la figure 1 représente le schéma fonctionnel du multiplexeur connu qui a été décrit précédemment;
- la figure 2 représente le schéma fonctionnel d'un multiplexeur selon l'invention;
- les figures 3, 4, 5 représentent respectivement les schémas synoptiques de trois exemples de réalisation du multiplexeur selon l'invention;
- la figure 6 représente le schéma fonctionnel d'un réseau en anneau comportant des multiplexeurs à insertion et extraction;
- la figure 7 représente le schéma synoptique de moyens à rajouter à un multiplexeur selon l'invention pour sécuriser un réseau en anneau tel que celui représenté sur la figure 6, et illustre la procédure de reconfiguration de cet anneau dans le cas d'une défaillance de liaison.

comme représenté sur la figure 2, la structure fonctionnelle du multiplexeur selon l'invention comporte :
- des moyens de commande MC, recevant des instructions pour configurer le multiplexeur, par un procédé de signalisation classique;
- des moyens DS2 pour démultiplexer spectralement un multiplex optique dit entrant, ME; ces moyens comportant N sorties fournissant respectivement les N porteuses constituant le multiplex entrant ME, ces porteuses ayant respectivement des longueurs d'onde λ1, ..., λN qui sont distinctes ;
- des moyens de commutation so commandés par les moyens de commande MC, comportant N entrées reliées respectivement aux N sorties des moyens DS2, et comportant N sorties; chaque sortie n'étant connectée qu'à une seule entrée;
- des moyens de sélection S1 commandés par les moyens de commande MC et équivalents à N commutateurs ayant chacun une entrée a et deux sorties b et c, chaque entrée a étant reliée respectivement à une sortie des moyens de commutation so; ces moyens S1 sélectionnant E porteuses dites extraites et T porteuses dites transmises, parmi les N porteuses démultiplexées par le démultiplexeur DS2 et transmises par les moyens de commutation SO; E et T pouvant chacun être au plus égal à N;
- N liaisons optiques, LS₁, ..., LS_{N}, reliées respectivement aux N sorties c des moyens S1, et constituant un multiplex extrait MT; ces liaisons transportant les E porteuses extraites, celles-ci conservant leurs longueurs d'onde respectives, dont les valeurs sont parmi λ₁, ..., λ_{N};
- N liaisons optiques, LE₁, ..., LE_{N}, pouvant recevoir chacune une porteuse dite à insérer, ces porteuses à insérer constituant un multiplex à insérer MI et ayant des longueurs d'onde quelconques, référencées λ"₁,...,λ"_{N};
- des moyens de commutation S4 commandés par les moyens de commande MC, comportant N entrées reliées respectivement aux N liaisons optiques LE₁, ..., LE_{N}, et comportant N sorties; ces moyens de commutation S4 établissant une connexion optique entre certaines de leurs entrées et certaines de leurs sorties, chaque sortie n'étant connectée qu'à une seule entrée mais chaque entrée pouvant être connectée à plusieurs sorties; ces moyens de commutation S4 permettant notamment de sélectionner I porteuses, dites à insérer, parmi les N porteuses reçues sur les liaisons LE₁, ..., LE_{N} du multiplex à insérer MI;
- des moyens de couplage S2 équivalents à N dispositifs de couplage commandés par les moyens de commande MC, et ayant chacun deux entrées, d et e, et une sortie f ; chaque entrée d étant reliée à une sortie b des moyens S1, et chaque entrée e étant reliée respectivement à l'une des sorties des moyens de commutation S4; la sortie f de chaque dispositif de couplage fournissant soit une porteuse transmise, soit une porteuse à insérer;
- des moyens de conversion CL comportant N entrées et N sorties; ces moyens CL permettant de convertir les longueurs d'onde respectives de N porteuses à N longueurs d'onde λ'₁..., λ'_{N}, fixées; la longueur d'onde obtenue étant fonction seulement de l'entrée où est appliquée la porteuse; les N entrées étant reliées respectivement aux N sorties f des moyens de couplage S2; les N sorties des moyens CL étant susceptibles de fournir respectivement N porteuses ayant des longueurs d'onde distinctes λ'₁,..., λ'_{N}; les porteuses effectivement fournies étant : T nouvelles porteuses modulées respectivement par les signaux modulant les T porteuses transmises, et I nouvelles porteuses respectivement modulées par les signaux modulant les I porteuses à insérer;
- des moyens MS2, ayant N entrées reliées respectivement aux N sorties des moyens CL, pour multiplexer spectralement N porteuses fournies par les moyens CL, et constituer ainsi un multiplex sortant MS;
- des moyens de commutation R équivalents à N interrupteurs, permettant de reboucler respectivement les liaisons LE₁, ..., LE_{N} du multiplex à insérer MI sur les liaisons LS₁, ..., LS_{N} du multiplex extrait MT, sous la commande des moyens de commande MC, chaque liaison pouvant être rebouclée indépendamment des autres.

Chaque commutateur des moyens S1 est commandé par les moyens de commande MC pour transmettre une porteuse appliquée à l'entrée a : soit vers la sortie b, soit vers la sortie c, soit vers les sorties b et c simultanément. Une porteuse du multiplex entrant ME peut donc être sélectionnée pour être :
- soit une porteuse extraite,
- soit une porteuse transmise,
- soit les deux à la fois.

Les moyens de commutation SO collaborent avec les moyens de conversion CL afin d'attribuer l'une des longueurs d'onde fixées λ'₁, ..., λ'_{N} à chacun des signaux modulants les porteuses transmises. Les moyens de commutation S4 collaborent avec les moyens de conversion CL afin d'attribuer l'une des longueurs d'onde fixées λ'₁, ..., λ'_{N} à chacun des signaux modulants portés par les porteuses à insérer. Toute longueur d'onde λ'ⱼ prise parmi les longueurs d'onde λ'₁, ..., λ'_{N} est mise en correspondance soit avec une longueur d'onde λᵢ prise parmi les longueurs d'onde λ'₁, ..., λ_{N} ; soit avec une longueur d'onde λ"ₖ prise parmi les longeurs d'onde λ"₁, ..., λ"_{N}. Ainsi le signal modulant de toute porteuse du multiplex sortant MS peut être choisi parmi tous les signaux modulant les porteuses du multiplex entrant ME, ou parmi tous les signaux modulant les porteuses du multiplex à insérer MI.

Les moyens S2 sont commandés par les moyens de commande MC de façon à transmettre soit une porteuse transmise par les moyens S1, soit une porteuse transmise par les moyens S4. Il y a donc indépendance entre le choix des longueurs d'onde λ"₁, ..., λ"_{N} des porteuses à insérer, et le choix des longueurs λ₁, ..., λ_{N} des porteuses entrantes.

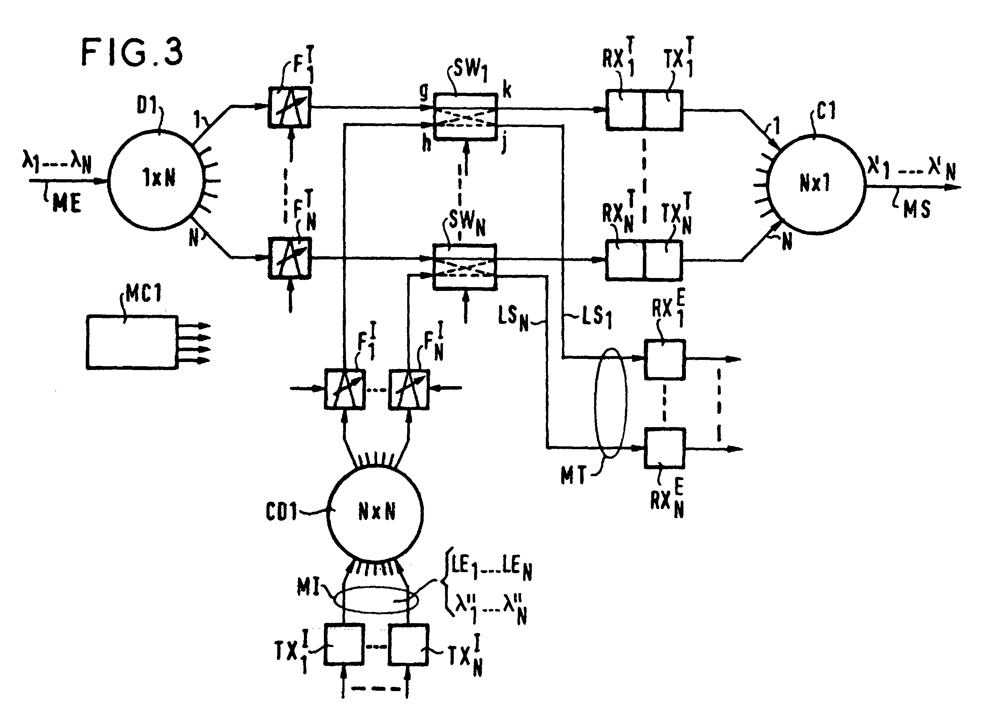

La figure 3 représente le schéma synoptique d'un premier exemple de réalisation du multiplexeur selon l'invention. Cet exemple de réalisation comporte :
- des moyens de commande MC1 recevant des instructions de configuration du multiplexeur, par un procédé de signalisation classique;
- un diffuseur optique D1 ayant une entrée recevant le multiplex entrant ME, et N sorties ;
- N filtres optiques accordables F₁^{T},..., F_{N}^{T}, ayant chacun une entrée reliée respectivement à l'une des sorties du diffuseur D1, et une entrée de commande reliée aux moyens de commande MC1 par des liaisons non représentées ;
- N commutateurs optiques SW₁, ..., SW_{N}, chacun ayant deux entrées, g et h, et deux sorties k et j, chaque entrée g étant reliée respectivement à la sortie de l'un des filtres F₁^{T} ..., F_{N}T ; et ayant une entrée de commande reliée aux moyens de commande MC1 par des liaisons non représentées ;
- N régénérateurs, constitués chacun d'un récepteur optique et d'un émetteur optique, RX₁^{T}-TX₁^{T},...,RX_{N}^{T}- TX_{N}^{T}; chaque récepteur ayant une entrée reliée à une sortie k de l'une des commutateurs SW₁,...,SW_{N}, et ayant une sortie reliée à une entrée de l'émetteur optique correspondant ;
- un combineur optique C1 ayant N entrées reliées chacune à une sortie de l'un des émetteurs optiques TX₁^{T},..., TX_{N}^{T}, et ayant une sortie fournissant le multiplex sortant MS ;
- N émetteurs optiques TX₁^{I},..., TX_{N}^{I}, ayant chacun une entrée électrique pouvant recevoir un signal modulant et ayant une sortie fournissant respectivement une porteuse de longueur d'onde λ"₁ ,..., λ"N, l'ensemble de ces N porteuses pouvant constituer un multiplex à insérer MI ;
- un combineur-diffuseur CD1 ayant N entrées reliées respectivement aux N sorties des émetteurs TX₁^{I},..., TX_{N}^{I}, et ayant N sorties ;
- N filtres accordables F₁^{I},...,F_{N}^{I}, ayant chacun : une entrée reliée à une sortie du combineur-diffuseur CD1; une entrée de commande reliée aux moyens de commande MC1 par une liaison non représentée ; et une sortie reliée respectivement à une entrée h de l'un des commutateurs optique SW₁,..., SW_{N} ;
- N récepteurs optiques RX₁^{E}, ..., RX_{N}^{E}, ayant chacun une entrée reliée respectivement à une sortie j de l'un des commutateurs optique SW₁,..., SW_{N}, cette sortie j étant susceptible de fournir l'une des porteuses optiques constituant le multiplex extrait MT ; et ayant chacun une sortie électrique fournissant un signal qui est le signal modulant la porteuse optique reçue par l'entrée de ce récepteur.

Chacun des filtres accordables F₁^{T}, ... , F_{N}^{T}, est accordable sur l'une des longueurs d'onde λ₁,..., λ_{N}, des porteuses constituant le multiplex entrant ME. Chacun des filtres accordable F₁^{I},..., F_{N}^{I} est accordable sur l'une des longueurs d'onde λ"₁,...,λ"_{N} des porteuses constituant le multiplex à insérer MI. Les émetteurs TX₁^{I}, ..., TX_{N}^{I}, émettent respectivement des longueurs d'onde λ"₁,...,λ"_{N} qui sont fixes et qui peuvent être différentes des longueurs d'onde λ₁,...,λ_{N} et λ'₁,...,λ'_{N}. Les émetteurs TX₁^{T},...,TX_{N}^{T} émettent des longueurs d'onde λ'₁,...,λ'_{N} qui sont fixes et qui sont indépendantes des longueurs d'onde λ₁,...λ_{N}, et λ"₁,..., λ"_{N}.

Chacun des commutateurs optiques SW₁,..., SW_{N} est commandable pour établir les connexions suivantes :
- g-k et h-j pour la transmission d'une porteuse du multiplex entrant ME vers le multiplex sortant MS;
- ou g-k et g-j, et h-k et h-j, pour la transmission vers le multiplex sortant MS, et l'extraction simultanée, d'une même porteuse vers le multiplex extrait MT; les filtres F₁I, ..., F_{N}I étant commandés alors pour être accordés sur une longueur d'onde dite de repos, différente de λ"₁, ..., λ"_{N}, pour n'appliquer aucun signal optique à l'entrée h;
- ou g-j et h-k pour l'extraction d'une porteuse du multiplex d'entrée ME vers le multiplex extrait MT, et l'insertion simultanée d'une autre porteuse multiplex à insérer MI vers le multiplex sortant MS.

Les commutateurs optiques SW₁,...,SW_{N} peuvent être constitués par des commutateurs du type PISW 15P fabriqués par la société CRYSTAL TECHNOLOGY (USA) ou du type PGS2010/5SS fabriqué par la société ERICSON (Suède).

D'autres types de commutateur optique peuvent bien entendu être utilisés, notamment des commutateurs dans lesquels les connexion optiques établies à partir des entrées g et h sont indépendantes.

Dans ce premier exemple de réalisation, les moyens DS2 pour démultiplexer les porteuses du multiplex entrant ME sont constitués par le diffuseur D1 et les N filtres accordables F₁^{T}, ..., F_{N}^{T}. Les moyens de commutation S4, pour attribuer une longueur d'onde choisie parmi les longueurs d'onde λ'₁, ..., λ'_{N}, à chacun des signaux modulants portés par le multiplex à insérer MI sont constitués du combineur-diffuseur CD1 et des N filtres accordables F₁^{I}, ..., F_{N}^{I}.

Les moyens de commutation SO, pour attribuer une longueur d'onde choisie parmi les longueurs d'onde λ'₁, ..., λ'_{N}, à chacun des signaux modulants les porteuses transmises, sont constitués des filtres accordables F₁^{T}, ..., F_{N}^{T} car ils sélectionnent le régénérateur RX₁^{T}, ..., ou RX_{N}^{T} qui convertira la longueur d'onde de chaque porteuse transmise. En outre, ces filtres sélectionnent la liaison LS₁, ..., ou LS_{N} sur laquelle sortira chaque porteuse extraite.

Les moyens de sélection S1 pour sélectionner T porteuses transmises et E porteuses extraites, parmi les N porteuses du multiplex entrant ME, sont constitués par les commutateurs optiques SW₁, ..., SW_{N}. Ces derniers constituent en outre les commutateurs R permettant de reboucler sélectivement les liaisons LE₁,...,LE_{N} du multiplex à insérer MI sur les liaisons LS₁, ..., LS_{N} du multiplex extrait MT. Enfin, ils constituent aussi les moyens de couplage S2. Ce sont des moyens de couplage actifs, puisqu'ils sont commandés par les moyens de commande MC1 pour acheminer les porteuses transmises et les porteuses à insérer vers les moyens de conversion CL. Ces derniers sont constitués, dans ce premier exemple de réalisation, par les N régénérateurs RX₁^{T} - TX₁^{T},..., RX_{N}^{T}-TX_{N}^{T} qui sont communs pour les porteuses transmises et pour les porteuses insérées.

Considérons, par exemple, le cas où le signal modulant la porteuse de longueur d'onde λ_{N} dans le multiplex entrant ME doit moduler une nouvelle porteuse ayant une longueur d'onde λ'₁ dans le multiplex sortant MS . La longueur d'onde λ'₁ est fournie, dans cet exemple, par l'émetteur TX₁^{T}. Les moyens de commandes MC1 commandent le filtre F₁^{T} pour sélectionner la longueur d'onde λ_{N}, et ils commandent le commutateur SW₁ pour établir la connexion g-k afin de transmettre la porteuse de longueur d'onde λ_{N} au récepteur RX₁^{T}. S'il faut en outre extraire le signal modulant la porteuse de longueur d'onde λ_{N} pour le fournir au multiplex extrait MT, les moyens de commande MC1 établissent en outre la connexion g-j. Les données sont disponibles alors sur la sortie du récepteur RX₁^{E} dans cet exemple.

Considérons maintenant le cas où le signal modulant une porteuse de longueur d'onde λ"i sur la liaison LEᵢ dans le multiplex à insérer MI est à insérer dans le multiplex sortant MS sur une porteuse optique de longueur d'onde λ'ₘ par exemple. La longueur d'onde λ'ₘ est émise par un émetteur TXₘ^{T}. Par conséquent, les moyens de commandes MC1 commandent un commutateur SWₘ pour établir une connexion h-k et ils commandent un filtre Fₘ^{I}, dont la sortie est reliée à l'entrée h du commutateur SWₘ, pour l'accorder sur la longueur d'onde λ"ᵢ de la porteuse à insérer. Le choix de la longueur d'onde λ'ₘ dépend des disponibilités parmi les longueurs d'onde λ'₁,..., λ'_{N}. Le nombre I de porteuses insérées dans le multiplex sortant MS est toujours inférieur ou égal au nombre N-T. Le nombre T peut être supérieur à N-E parce que certaines porteuses peuvent être à la fois transmises et extraites.

Les commutateurs SW₁, .., SW_{N} permettent en outre de réaliser un rebouclage d'une porteuse quelconque du multiplex à insérer MI vers une porteuse quelconque du multiplex extrait MT. supposons que le rebouclage doive être fait sur une liaison donnée. Le choix de cette liaison détermine le choix d'un commutateur parmi SW₁, ..., SW_{N}. Il faut alors distinguer deux cas, selon que ce commutateur doive acheminer en outre une porteuse transmise ou une porteuse à insérer.

Si le commutateur SW₁ établit la connexion g-k, il établit en outre systématiquement la connexion h-j. Pour reboucler une liaison quelconque LEₚ du multiplex à insérer MI sur la liaison LS₁, par exemple, du multiplex extrait MT, les moyens de commande MC1 accordent le filtre F₁^{I}, dont la sortie est reliée à l'entrée h du commutateur SW₁, sur la longueur d'onde λ"ₚ. Par contre, dans le cas où ce rebouclage n'est pas souhaité, ils doivent l'accorder sur une longueur d'onde, dite de repos, différente de λ"₁,...,λ_{N}^{"}.

Si le commutateur SW1 établit la connexion h-k pour insérer une porteuse appliquée sur la liaison LEᵢ par. exemple, il peut en outre établir simultanément une connexion h-j pour reboucler la liaison LEᵢ sur la liaison LS₁. Dans ce cas, le choix de la liaison LS du multiplex extrait n'est pas libre, mais est lié au choix de la nouvelle longueur d'onde attribuée au signal modulant la porteuse à insérer.

Pour éviter toute collision entre un signal modulant une porteuse transmise et un signal modulant une porteuse à insérer, les moyens de commande MC1 commandent les filtres F₁^{T}, ..., F_{N}^{T}, F₁^{I}, ..., F_{N}^{I}, et les commutateurs SW₁, ..., SW_{N}, de façon à interdire la transmission de deux porteuses simultanément vers un même régénérateur RX₁^{T}-TX₁^{T}, ..., RX_{N}^{T} - TX_{N}^{T}, ou vers un même récepteur RX₁^{E}, ..., RX_{N}^{E}.

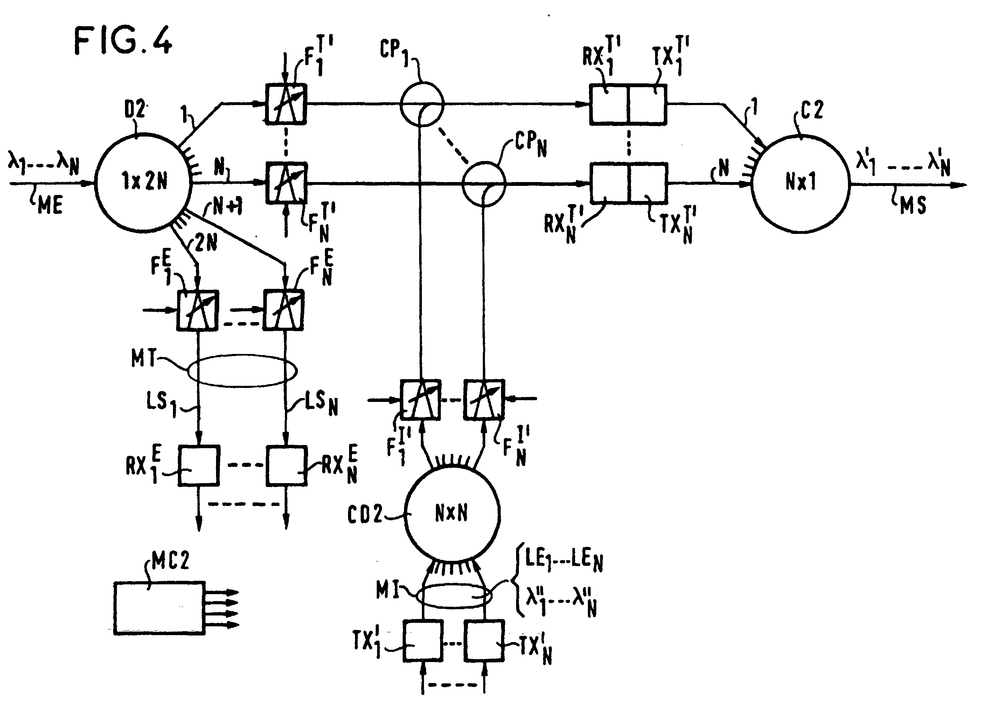

La figure 4 représente le schéma synoptique d'un deuxième exemple de réalisation du multiplexeur selon l'invention. Le multiplex entrant ME est appliqué à un diffuseur optique D2 qui possède 2N sorties. Les sorties numérotées 1 à N sont reliées respectivement aux entrées des N filtres accordables F₁^{T'},..., F_{N}^{T'}; alors que les sorties numérotées N+1 à 2N sont reliées respectivement aux entrées de N filtres accordables supplémentaires F₁^{E},..., F_{N}^{E}. Les sorties de ces derniers fournissent le multiplex extrait MT. Ces filtres sont commandés par des signaux fournis par des moyens de commandes MC2.

Dans ce deuxième exemple de réalisation les moyens de démultiplexage DS2 sont constitués : du diffuseur D2 et des N filtres accordables F₁^{T'},..., F_{N}^{T'}, pour sélectionner T porteuses transmises; et des N filtres accordables F₁^{E},..., F_{N}^{E} pour sélectionner E porteuses extraites. Les moyens de commutation S0 sont constitués de ces mêmes filtres F₁^{T'},..., F_{N}^{T'} et F₁^{E},..., F_{N}^{E}.

Les moyens de sélection S1 sont constitués des N filtres accordables F₁^{E}, ..., F_{N}^{E} pour sélectionner E porteuses extraites, et des N filtres accordables F₁^{T'}, ..., F_{N}^{T'} pour sélectionner T porteuses transmises au multiplex sortant MS. Comme dans le premier exemple de réalisation, les filtres F₁^{T'}, ..., F_{N}^{T'} établissent une correspondance entre les longueurs d'onde choisies parmi λ ₁, ···, λ_{N} de T porteuses transmises, et les longueurs d'onde choisies parmi λ'₁, ..., λ'_{N}, des T nouvelles porteuses, et permettent de reconfigurer cette correspondance.

Les moyens de couplage S2 sont constitués des filtres accordables F₁^{T'}, ..., F_{N}^{T'} et F₁^{I'},..., F_{N}^{I'}, et de N coupleurs passifs CP₁, ..., CP_{N}.

Les commutateurs optiques SW₁,...,SW_{N} sont supprimés et sont remplacés par les N coupleurs passifs CP₁,..., CP_{N} ayant chacun deux entrées et une sortie :
- une entrée est reliée à une sortie de l'un des filtres accordables F₁^{T'},...,F_{N}^{T'};
- l'autre entrée est reliée à une sortie de l'un des filtres accordables F₁^{I'},..., F_{N}^{I'} qui ont les mêmes fonctions que les filtres F₁^{I},..., FN^{I} dans le premier exemple de réalisation;
- et la sortie est reliée à une entrée de l'un des récepteurs RX₁^{T'},..., RX_{N}^{T'} qui ont les mêmes fonctions que les récepteurs RX₁^{T},..., RX_{N}^{T} du premier exemple de réalisation.

Les moyens de commutation S4 sont constitués du combineur CD2 et des filtres accordables F₁^{I'},..., F_{N}^{I'}.

Dans ce deuxième exemple de réalisation il n'y a pas de moyens de commutation R permettant de reboucler sélectivement des liaisons LE₁, ..., LE_{N} du multiplex à insérer MI sur des liaisons LS₁, ..., LS_{N} du multiplex extrait MT.

Les autres composants de ce deuxième exemple de réalisation sont analogues à ceux du premier exemple de réalisation décrit précédemment.

Les moyens de commande MC2 accordent E filtres parmi les filtres F₁^{E}, ..., F_{N}^{E} sur les E longueurs d'onde des porteuses à extraire. Le choix d'un filtre pour extraire une porteuse donnée est fonction de la liaison LS du multiplex extrait MT, vers laquelle le signal modulant cette porteuse doit être aiguillé. Les moyens de commande MC2 accordent en outre T filtres, parmi les filtres F₁^{T'}, ..., F_{N}^{T'}, respectivement sur les T longueurs d'onde des porteuses dont les signaux modulants doivent être aiguillés vers le multiplex sortant MS.

Il est tout à fait possible de sélectionner une même porteuse pour qu'elle soit extraite et transmise simultanément. Les filtres non utilisés, parmi les filtres F₁^{T'}, ..., F_{N}^{T'} sont accordés sur une longueur d'onde dite de repos, qui est différente de toutes les longueurs d'onde λ₁, ..., λ_{N} du multiplex entrant ME. Les moyens de commande MC2 accordent en outre I filtres parmi les filtres F₁^{I'}, ..., F_{N}^{I'} sur I longueurs d'onde choisies parmi les longueurs d'onde λ"₁, ..., λ"_{N} du multiplex à insérer MI, pour que ces filtres transmettent I porteuses dont les signaux modulants sont à insérer sur le multiplex sortant MS. Les filtres non utilisés, parmi les filtres F₁^{I'}, ..., F_{N}^{I'} sont accordés sur une longueur d'onde de repos, qui est différente de λ"₁, ..., λ"_{N}.

Pour éviter toute collision entre un signal modulant une porteuse transmise et un signal modulant une porteuse à insérer, les moyens de commande MC2 commandant les filtres F₁^{T'}, ..., F_{N}^{T'} et F₁^{I'}, ..., F_{N}^{I'} de façon à interdire la transmission de deux porteuses simultanément vers un même régénérateur RX₁^{T'} - TX₁^{T'}, ..., RX_{N}^{T'} - TX_{N}^{T'}.

Considérons à titre d'exemple l'extraction du signal modulant d'une porteuse de longueur d'onde λ₁ du multiplex d'entrée ME vers la liaison LS₄ du multiplex extrait MT, et l'insertion du signal modulant d'une porteuse de longueur d'onde λ"₂ du multiplex à insérer MI sur une porteuse de longueur d'onde λ'₅ dans le multiplex sortant MS. Les moyens de commandes MC2 accordent le filtre F₄^{E} sur la longueur d'onde λ₁ de la porteuse à extraire. Ils accordent le filtre F₅^{I'} sur la longueur λ₂". Le coupleur passif CP5 achemine la porteuse de longueur d'onde λ₂" jusqu'au régénérateur RX₅^{T'}-TX₅^{T'} qui émet sur la longueur d'onde λ'5.

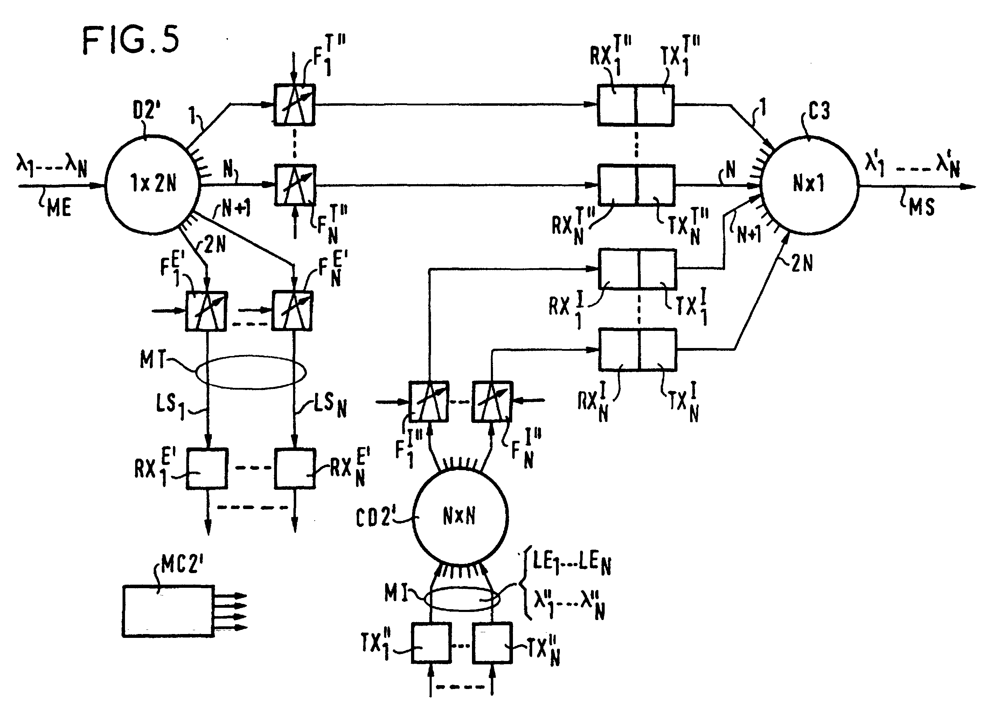

La figure 5 représente le schéma synoptique d'un troisième exemple de réalisation. Celui-ci diffère du deuxième exemple de réalisation seulement par le fait que les moyens de couplage S2 et les moyens de conversions CL sont réalisés différemment. Les autres moyens sont analogues à ceux du deuxième exemple de réalisation. Ce troisième exemple de réalisation ne comporte pas de moyens R permettant de reboucler sélectivement les liaisons LE₁, ..., LE_{N} sur les liaisons LS₁, ..., LS_{N}.

Les coupleurs passifs CP₁,..., CP_{N} sont supprimés et remplacés par des liaisons directes entre les sorties de N filtres accordables F₁^{T"}, ..., F_{N}^{T"} sélectionnant T porteuses transmises, et les entrées de N régénérateurs RX₁^{T"}- TX₁^{T"}, ..., RX_{N}^{T"}- TX_{N}^{T"}. L'insertion de porteuses est réalisée au moyen d'un combineur C3 qui comporte 2N entrées, au lieu du combineur C2 qui ne comportaient que N entrées. Les entrées du combineur C3 numérotées 1 à N sont reliées respectivement aux sorties des N régénérateurs RX₁^{T"} - TX₁^{T"},..., RX_{N}^{T"} - TX_{N}^{T"}, et les entrées numérotées N+1 à 2N sont reliées respectivement aux sorties de N régénérateurs supplémentaires RX₁^{I}- TX₁^{I},..., RX_{N}^{I} - TX_{N}^{I}. Ces régénérateurs supplémentaires comportent chacun une entrée reliée respectivement à la sortie d'un filtre accordable F₁^{I"},...,F_{N}^{I"}, remplissant les mêmes fonctions que les filtres F₁^{I'},..., F_{N}^{I'}, dans le deuxième exemple de réalisation. Les moyens de commutation S2 sont donc constitués, dans cet exemple, des filtres accordables F₁^{I"},...,F_{N}^{I"} et F₁^{T"}, ..., F_{N}^{T"}.

Des moyens de commande MC2' remplissent les mêmes fonctions que les moyens de commande MC2 dans le deuxième exemple de réalisation. Pour éviter toute collision entre un signal modulant une porteuse transmise et un signal modulant une porteuse à insérer, les moyens de commande MC2 commandent ces filtres en s'interdisant de sélectionner une porteuse par un filtre Fᵢ^{I"} si le filtre Fᵢ^{T"} sélectionne déjà une porteuse, et réciproquement.

Les émetteurs TX₁^{I,...,} TX_{N}^{I} sont accordés sur les longueurs d'onde λ'₁,..., λ'_{N}, respectivement; comme les émetteurs TX₁^{T"},..., TX_{N}^{T"}. Au lieu d'accorder certains filtres F₁^{T"},..., F_{N}^{T"}, respectivement F₁^{I"}, ..., F_{N}^{I"}, sur une longueur d'onde de repos, il est possible d'éteindre les régénérateurs RX₁^{T"}-TX₁^{T"}, ..., RX_{N}^{T"} - TX_{N}^{T"}; RX₁^{I} - TX₁^{I},..., RX_{N}^{I} - TX_{N}^{I} correspondant.

La portée de l'invention n'est pas limitée au cas où le nombre de liaisons entrantes et le nombre de liaisons sortantes sont égaux à N. L'un ou l'autre, ou ces deux nombres peuvent être inférieurs à N dans certaines applications.

D'autre part, les moyens de conversion de longueur d'onde peuvent être constitués de convertisseurs du type optique-optique, au lieu d'être des régénérateurs.

Le fait que les filtres F₁^{T},..., F_{N}^{T}, et les filtres analogues dans les autres exemples de réalisation, soient accordables procure l'avantage de permettre une protection du multiplexeur contre la défaillance de l'un des composants de ce multiplexeur. Les moyens de commande peuvent alors faire un reroutage interne au multiplexeur pour éviter de faire passer l'une des porteuses par le composant défaillant. Naturellement la capacité de transmission de multiplexeur est alors réduite à N-1 porteuses, mais il n'y a aucune perte d'information tant que la charge de données à transmettre n'est pas supérieure à la capacité de transport des N-1 porteuses restantes.

Une modification simple des trois exemples de réalisations décrits précédemment permet de protéger un réseau contre une défaillance d'un multiplexeur. Il suffit de prévoir une porte optique placée en dérivation par rapport au multiplexeur, cette porte étant bloquante lorsque le multiplexeur fonctionne normalement et étant passante lorsque le multiplexeur est défaillant. Cette porte peut court-circuiter le multiplex d'entrée ME vers le multiplex de sortie MS, ou bien, dans un autre mode de réalisation, peut relier une sortie supplémentaire du diffuseur d'entrée, respectivement D1, D2, D"2, et une entrée supplémentaire du combineur de sortie, respectivement C1, C2, C3.

Pour protéger un réseau contre une défaillance de ligne, il est connu de donner à ce réseau la forme d'un double anneau.

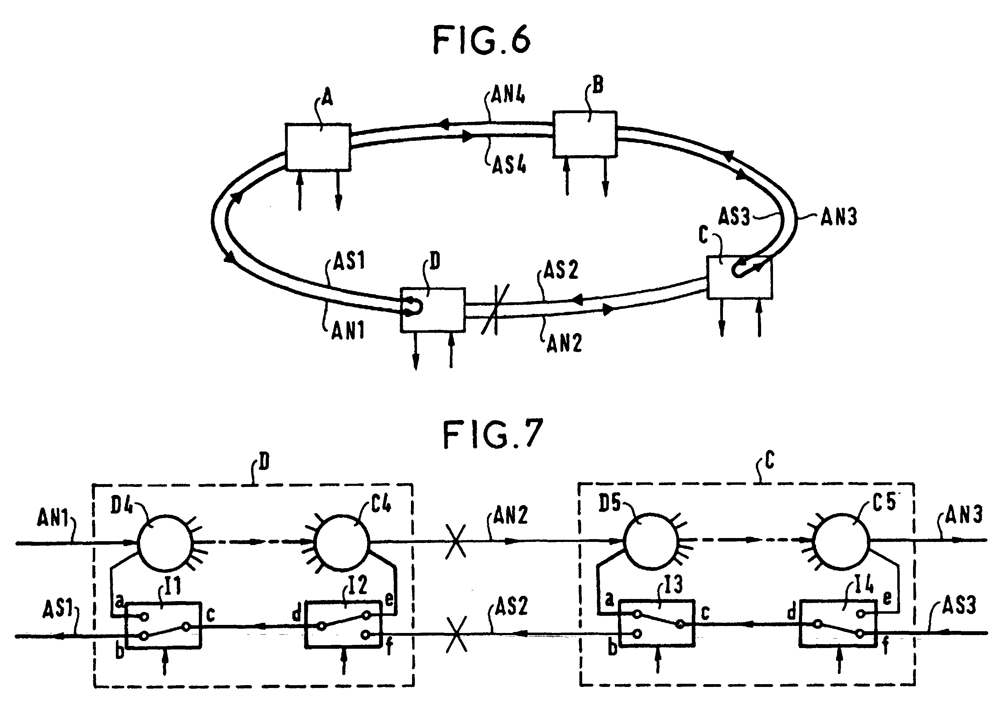

La figure 6 illustre ce procédé connu de protection contre une défaillance d'une ligne de transmission. Dans cet exemple, quatre multiplexeurs à insertion-extraction, A, B, C, D sont reliés en réseau par un anneau dit normal AN1, AN2, AN3, AN4; et par un anneau dit de secours AS1, AS2, AS3, AS4. Dans cet exemple, les segments AN2 et AS2 sont interrompus par une panne ou un accident quelconque. Les données qui circulaient normalement sur l'anneau AN1, AN2, AN3, AN4 circulent désormais sur un anneau replié constitué par les segments AN1, AS1, AS4, AS3, AN3, AN4, grâce à deux rebouclages réalisés respectivement dans le multiplexeur D et dans le multiplexeur C, ces deux multiplexeurs encadrant les segments AN2 et AS2 où est située l'interruption de ligne. Le service est donc maintenu après une brève interruption nécessaire pour l'établissement de ces rebouclages.

La figure 7 représente une partie du schéma synoptique des multiplexeurs D et C pour montrer les composants supplémentaires utilisés pour réaliser les rebouclages. Les deux anneaux comportent éventuellement des amplificateurs qui ne sont pas représentés.

Le multiplexeur D comporte :
- un diviseur optique D4 ayant une entrée reliée au segment AN1 de l'anneau normal;
- un combineur C4 ayant une sortie reliée au segment AN2 de l'anneau normal, ce segment étant interrompu dans cet exemple;
- un commutateur optique I1 ayant 3 accès, a, b, c, et une entrée de commande reliée aux moyens de commande du multiplexeur D, ces moyens de commande n'étant pas représentés;
- un commutateur optique I2 ayant trois accès d, e, f, et une entrée de commande reliée aux moyens de commande du multiplexeur D, non représentés.

Les pertes causées par les combineurs et les diffuseurs sont inchangées sur l'anneau normal. Le bilan de la liaison n'est donc pas modifié sur l'anneau normal. Le multiplexeur selon l'invention présente donc l'avantage d'être entièrement compatible avec ce procédé connu de protection.

Le commutateur I1 se comporte comme un inverseur permettant d'établir une connexion optique : soit a-c, soit b-c. De même le commutateur I2 se comporte comme un inverseur permettant d'établir une connexion optique : soit d-e, soit d-f. l'accès a est relié à une entrée du diviseur D4. L'accès b est reliée au segment AS1 de l'anneau de secours. L'accès c est relié à l'accès d du commutateur I2. L'accès e est relié à une sortie du combineur C4. L'accès f est relié au segment AS2 de l'anneau de secours.

Le multiplexeur C comporte des composants homologues : un diviseur D5, un combineur C5, et deux commutateurs optiques I3 et I4. L'accès b du commutateur I3 est relié au segment AS2 qui est interrompu. L'accès f du commutateur I4 est relié au segment AS3. Une entrée du diviseur D5 est reliée au segment AN2 qui est interrompu. Une sortie du combineur C5 est reliée au segment AN3.

Lorsqu'il n'y a pas de défaillance de la ligne de transmission, le commutateur optique I1 et tous les commutateurs homologues établissent la connexion b-c; le commutateur optique I2 et tous les commutateurs homologues établissent la connexion d-f. Les segments AS1, AS2, AS3, AS4 constituent un anneau fermé sur lequel ne circule aucune donnée. Les segments AN1, AN2, AN3, AN4 constituent un anneau fermé sur lequel circulent les données.

Dans le cas d'une défaillance de la ligne entre les multiplexeurs D et C, comme représenté sur la figure 7, les moyens de commandes du multiplexeur D commandent le commutateur I1 pour maintenir la connexion b-c et commandent le commutateur I2 pour établir la connexion d-e au lieu de d-f. Ainsi le multiplex sortant du combineur C4, qui ne peut plus être acheminé par le segment AN2, est rerouté sur le segment AS1 via les commutateurs I1 et I2.

Symétriquement, les moyens de commande du multiplexeur C commandent le commutateur I3 pour établir la connexion a-c au lieu de b-c, et le commutateur I4 pour maintenir la connexion d-f.

## Revendications

1. Multiplexeur spectral optique à insertion-extraction, pour extraire un multiplex extrait (MT), d'un multiplex entrant (ME), et pour insérer un multiplex à insérer (MI) dans un multiplex sortant (MS), comportant:
- des premiers moyens pour démultiplexer spectralement (D1, F₁^{T},.., F_{N}^{T}; D2, F₁^{T'},.., F_{N}^{T'}), susceptibles de séparer N porteuses dans le multiplex entrant (ME), ce multiplex entrant comportant au plus N porteuses;
- des seconds moyens pour démultiplexer spectralement (CD1, F₁^{I}, ..., F_{N}^{I} ; CD2, F₁^{I'}, ..., F_{N}^{I'}) susceptibles de séparer N porteuses dans le multiplex à insérer (MI), ce multiplex à insérer comportant au plus N porteuses;
- des moyens pour multiplexer spectralement, susceptibles de multiplexer N porteuses et constituer ainsi un multiplex sortant (MS), comportant :
-- N convertisseurs de longueur d'onde (RX₁^{T} - TX₁^{T}, ...; RX₁^{T'}-TX₁^{T'},...);
-- un combineur optique (C1 ; C2) à N entrées reliées respectivement aux sorties de N convertisseurs de longueur d'onde ;
- des moyens de couplage pour coupler les moyens pour démultiplexer aux moyens pour multiplexer; comportant des moyens pour sélectionner et fournir aux moyens pour multiplexer: T porteuses sélectionnées parmi les porteuses démultiplexées par les premiers moyens pour démultiplexer, le nombre T étant variable et au plus égal à N ; et I porteuses sélectionnées parmi les porteuses démultiplexées par les seconds moyens pour démultiplexer, le nombre I étant variable et au plus égal à N ;
**caractérisé en ce que les premiers et seconds moyens pour démultiplexer, et les moyens de couplage comportent :**
-- un diffuseur optique (D1; D2) recevant le multiplex entrant (ME) et le restituant sur au moins N sorties ;
-- un premier ensemble de N filtres accordables (F₁^{T}, ..., F_{N}^{T}; F₁^{T'}, ..., F_{N}^{T'}) couplés respectivement à N sorties du diffuseur (D1 ; D2) pour sélectionner dans le multiplex entrant les T porteuses transmises, le nombre T étant variable et au plus égal à N ;
-- un second ensemble de N filtres accordables (F₁^{I}, ..., F_{N}^{I}; F₁^{I'}, ..., F_{N}^{I'}) pour sélectionner, parmi des porteuses constituant le multiplex à insérer (MI), les I porteuses à insérer ;
-- N dispositifs élémentaires de couplage (SW₁, ..., SW_{N} ; CP₁,..., CP_{N}), chaque dispositif comportant :
--- au moins une première sortie, reliée à une entrée d'un convertisseur de longueur d'onde (RX₁^{T}-TX₁^{T},... ; RX₁^{T'}-TX₁^{T'}, ...),
--- une première entrée reliée à une sortie du premier ensemble de N filtres accordables (F₁^{T}, ..., F_{N}^{T}; F₁^{T'}, ..., F_{N}^{T'}),
--- une seconde entrée reliée à une sortie du second ensemble de N filtres accordables (F₁^{I}, ..., F_{N}^{I} ; F₁^{I'}, ..., F_{N}^{I'});
et **en ce que** chaque dispositif élémentaire de couplage (SW₁, ..., SW_{N}; CP₁,..., CP_{N}) ou le filtre auquel il est relié, peut être commandé pour interdire la transmission de deux porteuses simultanément vers un même convertisseur de longueur d'onde (RX₁^{T}-TX₁^{T}, ... ; RX₁^{T'}-TX₁^{T'}, ...).

2. Multiplexeur selon la revendication 1, **caractérisé en ce que** chacun des N dispositifs élémentaires de couplage comporte un commutateur optique (SW₁, ..., SW_{N}) à deux entrées et deux sorties, une première sortie (k) étant reliée à une entrée des convertisseurs de longueurs d'onde (RX₁^{T}-TX₁^{T}, ...), et une seconde sortie (j) étant reliée au multiplex extrait (MT) ;
et **en ce que** chaque dispositif élémentaire de couplage (SW₁, ..., SW_{N}) peut être commandé pour relier chacune de ses deux entrées alternativement à la première et à la seconde sortie.

3. Multiplexeur selon la revendication 1, **caractérisé en ce que** chacun des N dispositifs élémentaires de couplage comporte un coupleur passif (CP₁ ,..., CP_{N}) ayant deux entrées couplées à une sortie, cette sortie étant reliée à une entrée des convertisseurs de longueurs d'onde (RX₁^{T'}-TX₁^{T'}, ...).

4. Multiplexeur selon la revendication 3, **caractérisé en ce que** le diffuseur optique (D2') comporte N sorties supplémentaires ;
et **en ce que** les premiers moyens pour démultiplexer comportent en outre un ensemble de N filtres accordables supplémentaires (F₁^{E}, .., F_{N}^{E}) couplés respectivement aux N sorties supplémentaires du diffuseur (D2') et reliés au multiplex extrait (MT).

## Patentansprüche

1. Optischer spektraler Multiplexer mit Einfügung und Ausblendung von Kanälen. zum Extrahieren eines extrahierten Multiplex (MT) aus einem eintreffenden Multiplex (ME) und zum Einrügen eines einzufügenden Multiplex (MI) in einen ausgehenden Multiplex (MS), mit:
- ersten Mitteln zum spektralen Demultiplexen (D1, F₁^{T}, ..., F_{N}^{T}; D2, F₁^{T'}, ..., F_{N}^{T'}), die in der Lage sind, N Träger in dem eintreffenden Multiplex (ME) zu trennen, wobei dieser eintreffende Multiplex maximal N Träger aufweist;
- zweite Mittel zum spektralen Demultiplexen (CD1, F₁¹, ..., F_{N}¹; CD2, F₁^{1'}, ..., F_{N}^{1'}), die in der Lage sind, N Träger in dem einzufügenden Multiplex (MI) zu trennen, wobei dieser einzufügende Multiplex maximal N Träger aufweist;
- Mittel zum spektralen Multiplexen, die in der Lage sind, N Träger zu multiplexen und so einen ausgehenden Multiplex (MS) zu bilden, mit:
-- N Wellenlängenwandlern (RX₁^{T}-TX₁^{T}, ...; RX₁^{T'} - TX₁^{T'}, ...);
-- einem optischen Kombinierer (C1; C2) mit N Eingängen, die jeweils mit den Ausgängen von N Wellenlängenwandlern verbunden sind;
- Kopplungsmitteln zum Koppeln der Mittel zum Demultiplexen mit den Mitteln zum Multiplexen, welche Mittel zum Auswählen und Liefern an die Mittel zum Multiplexen von T ausgewählten Trägern unter den von den ersten Mitteln zum Demultiplexen gedemultiplexten Trägern, wobei die Zahl T variabel und maximal gleich N ist; und von I unter den von den zweiten Mitteln zum Demultiplexen gedemultiplexten Trägem ausgewählten Trägern. wobei die Zahl I variabel und maximal gleich N ist, umfassen;
**dadurch gekennzeichnet, dass** die ersten und zweiten Mittel zum Demultiplexen und die Kopplungsmittel umfassen:
-- einen optischen Verteiler (D1; D2), der den eintreffenden Multiplex (ME) empfängt und ihn an wenigstens N Ausgängen wiedergibt;
-- eine erste Anordnung von N abstimmbaren Filtern (F₁^{T}, ..., F_{N}^{T}; F₁^{T'} ..., F_{N}^{T'}) die jeweils an N Ausgänge des Verteilers (D1; D2) gekoppelt sind, um in dem eintreffenden Multiplex die T übertragenen Träger auszuwählen, wobei die Zahl T variabel und maximal gleich N ist;
-- eine zweite Anordnung von N abstimmbaren Filtern (F₁^{I}, ..., F_{N}^{I}; F₁^{I'}, ..., F_{N}^{I'}), zum Auswählen der I einzufügenden Träger unter den den einzufügenden Multiplex (MI) bildenden Trägern;
-- N elementare Kopplungsvorrichtungen (SW₁, ..., SW_{N}; CP₁, ..., CP_{N}). wobei jede Vorrichtung umfasst:
--- wenigstens einen ersten Ausgang, der mit einem Eingang eines Wellenlängenwandlers (RX₁^{T} - TX₁^{T}, ...; RX₁^{T'} - TX₁^{T'}, ...) verbunden ist,
--- einen ersten Eingang, der mit einem Ausgang der ersten Anordnung von N abstimmbaren Filtern (F₁^{T}, ..., F_{N}^{T}; F₁^{T'}. .., F_{N}^{T'}) verbunden ist,
--- einen zweiten Eingang, der mit einem Ausgang der zweiten Anordnung von N abstimmbaren Filtern (F₁¹, ..., F_{N}¹; F₁^{T'}, ..., F_{N}^{T'}) verbunden ist;
und dass jede elementare Kopplungsvorrichtung (SW₁, ..., SW_{N}; CP₁, ..., CP_{N}) oder das Filter, mit dem sie verbunden ist, steuerbar ist, um die Übertragung von zwei Trägern gleichzeitig zu einem gleichen Wellenlängenwandler (RX₁^{T} - TX₁^{T}, ...; RX₁^{T'} - TX₁^{T'}, ...) zu sperren.

2. Multiplexer nach Anspruch 1, **dadurch gekennzeichnet, dass** jede der N elementaren Kopplungsvorrichtungen einen optischen Schalter (SW₁, .... SW_{N}) mit zwei Eingängen und zwei Ausgängen umfasst, wobei ein ersten Ausgang (k) mit einem Eingang der Wellenlängenwandler (RX₁^{T} - TX₁^{T}, ...) verbunden ist und ein zweiter Ausgang (j) mit dem extrahierten Multiplex (MT) verbunden ist;
und dass jede elementare Kopplungsvorrichtung (SW₁, .... SW_{N}) steuerbar ist, um jeden ihrer zwei Eingänge alternativ mit dem ersten und mit dem zweiten Ausgang zu verbinden.

3. Multiplexer nach Anspruch 1, **dadurch gekennzeichnet, dass** jede der N elementaren Kopplungsvorrichtungen einen passiven Koppler (CP₁, ..., CP_{N}) mit zwei an einen Ausgang gekoppelten Eingängen hat, wobei dieser Ausgang mit einem Eingang der Wellenlängenwandler (RX₁^{T'} - TX₁^{T'}, ...) verbunden ist.

4. Multiplexer nach Anspruch 3, **dadurch gekennzeichnet, dass** der optische Verteiler (D2') N zusätzliche Ausgänge umfasst, und dass die ersten Mittel zum Demultiplexen ferner eine Anordnung von N zusätzlichen abstimmbaren Filtern (F₁^{E}, ..., F_{N}^{E}) umfasst, die jeweils an die N zusätzlichen Ausgänge des Verteilers (D2') angeschlossen und mit dem extrahierten Multiplex (MT) verbunden sind.

## Claims

1. An add-drop optical spectrum-division multiplexer for dropping a drop multiplex (MT) from an incoming multiplex (ME), and for adding an add multiplex (MI) to an outgoing multiplex (MS), the multiplexer comprising:
first spectrum-division demultiplexing means (D1, F₁^{T}, ..., F_{N}^{T}; D2, F₁^{T'}, ..., F_{N}^{T'})suitable for separating N carriers from the incoming multiplex (ME), said incoming multiplex having no more than N carriers;
second spectrum-division demultiplexing means (CD1, F₁^{I} ..., F_{N}^{I}; CD2, F₁^{I'}, ..., F_{N}^{I'}) suitable for separating N carriers from the add multiplex (MI), said add multiplex having no more than N carriers;
spectrum-division multiplexing means suitable for multiplexing N carriers, thereby constituting an outgoing multiplex (MS), comprising:
N wavelength converters (RX₁^{T}-TX₁^{T}, ...; RX₁^{T'}-TX₁^{T'}, ...); and
an N-inlet optical combiner (C1; C2) having its inlets connected to the outlets of respective ones of the N wavelength converters; and
coupling means for coupling the demuitiplexing means to the multiplexing means; the coupling means comprising means for selecting and providing the multiplexer means with: T carriers selected from amongst the demultiplexed carriers by the first demultiplexing means, the number T being variable and not greater than N; and I carriers selected from amongst the demultiplexed carriers by the second demultiplexing means, the number I being variable and not greater than N;
the multiplexer being **characterized in that** the first and second demultiplexing means and the coupling means comprise:
an optical broadcaster (D1; D2) receiving the incoming multiplex (ME) and reproducing it on at least N outlets;
a first set of N tunable filters (F₁^{T}, ..., F_{N}^{T}; F₁^{T'}, ..., F_{N}^{T'}) coupled respectively to the N outlets of the broadcaster (D1; D2) to select the T through carriers from the incoming multiplex, where the number T is variable and not greater than N;
a second set of N tunable filters (F₁^{I}, ..., F_{N}^{I}; F₁^{I'}, ..., F_{N}^{I'}) for selecting, from amongst the carriers constituting the add multiplex (MI), the I carriers to be added; and
N individual coupling devices (SW₁, ..., SW_{N}; CP₁, ..., CP_{N}), each device comprising:
at least one first outlet, connected to one inlet of a wavelength converter (RX₁^{T}-TX₁^{T}, ...; RX₁^{T'}-TX₁^{T'}, ...);
one first inlet connected to one outlet of the first set of N tunable filters (F₁^{T}, ..., F_{N}^{T}; F₁^{T'}, ..., F_{N}^{T'}); and
one second inlet connected to one outlet of the second set of N tunable filters (F₁^{I}, ..., F_{N}^{I}; F₁^{I'}, ..., F_{N}^{I'});
and **in that** each individual coupling device (SW₁, ..., SW_{N}; CP₁, ..., CP_{N}) or the filter to which it is connected, can be controlled so as to prevent two carriers being transmitted simultaneously to the same wavelength converter (RX₁^{T}-TX₁^{T}, ...; RX₁^{T'}-TX₁^{T'}, ...).

2. A multiplexer according to claim 1, **characterized in that** each of the N individual coupling devices comprises an optical switch (SW₁, ..., SW_{N}) having two inlets and two outlets, a first outlet (k) being connected to an inlet of the wavelength converters (RX₁^{T}-TX₁^{T}, ...), and a second outlet (j) being connected to the drop multiplex (MT);
and **in that** each individual coupling device (SW₁, ..., SW_{N}) can be controlled so as to connect each of its two inlets alternately to the first and to the second outlet.

3. A multiplexer according to claim 1, **characterized in that** each of the N individual coupling devices comprises a passive coupler (CP₁, CP_{N}) hawing two inlets coupled to one outlet; the outlet being connected to one inlet of the wavelength converters (RX₁^{T'}-TX₁^{T'}, ...).

4. A multiplexer according to claim 3, **characterized in that** the optical broadcaster D2' includes N additional outlets;
and **in that** the first demultiplexing means further include a set of N additional tunable filters (F₁^{E}, ..., F_{N}^{E}) coupled respectively to the N additional outlets of the broadcaster (D2') and connected to the drop multiplex (MT).
